# EUROPÄISCHE PATENTSCHRIFT

(11) **EP 0 380 013 B1**
(45) Veröffentlichungstag und Bekanntmachung des Hinweises auf die Patenterteilung: **03.08.1994**
(21) Anmeldenummer: 90101177.5
(22) Anmeldetag: 22.01.1990
(51) Int. Cl.: B60J 1/02, B60R 13/02

(54) **Vorrichtung zur Befestigung eines Dachhimmels einer Schiebedach- oder Schiebehebedachkonstruktion**
Device for fastening a roof liner to the construction of a sliding sun roof of a sliding pivoting sun roof
Système de fixation d'un ciel de toit pour la construction d'un toit coulissant ou toit coulissant basculant

(30) Priorität: 26.01.1989 DE 3902278
(43) Veröffentlichungstag der Anmeldung: 01.08.1990
(73) Patentinhaber: Rockwell Golde GmbH, 60314 Frankfurt (DE)
(72) Erfinder: Grimm, Rainer, Dipl.-Ing., D-6330 Wetzlar (DE); Schmidhuber, Karl, D-8755 Alzenau (DE)
(74) Vertreter: Oppermann, Ewald, Dipl.-Ing.

(56) Entgegenhaltungen:
- DE-C- 3 221 487
- FR-A- 1 192 068
- FR-A- 2 462 308

## Beschreibung

Die Erfindung bezieht sich auf eine Vorrichtung zur Befestigung eines vorgeformten steifen Dachhimmels an horizontalen Flanschen eines die Dachöffnung einer Schiebedach- oder Schiebehebedachkonstruktion umgebenden Dachrahmens mittels eines Klemmprofils, das in zwei übereinander angeordneten Nuten die Ränder der Flansche und des Ausschnitts aufnimmt, wobei der Dachhimmel einen der Dachöffnung entsprechenden Ausschnitt aufweist.

Unter der Bezeichnung "Dachrahmen" sollen alle üblichen Rahmenkonstruktionen verstanden werden, die den Dachausschnitt im festen Fahrzeugdach umgeben und von unten am festen Fahrzeugdach befestigt sind. Hierzu zählen einstückige aus Blech gepreßte Rahmen, aus mehreren Teilen zusammengesetzte Rahmen und auch solche Rahmen, bei denen die Rahmenteile mit den Führungsschienen der Dachkonstruktion zu einem einteiligen U-förmigen Führungsrahmen vereinigt sind.

Bei einer bekannten Kabelführung für Kraftfahrzeugdächer (DE-C2 32 21 487) wird eine Vorrichtung der eingangs angegebenen Gattung verwendet. Hierbei ist das um den Ausschnitt im Dachhimmel umlaufende Klemmprofil nach Art eines flexiblen Keders ausgebildet, welcher mit seinen beiden übereinander angeordneten parallelen und horizontalen Nuten sowohl auf den Flansch des Dachrahmens als auch auf den Rand des Ausschnittes im Dachhimmel aufgesteckt ist. Zwar wird mit dieser Anordnung der Dachhimmel zuverlässig an dem horizontalen Flansch des Dachrahmens befestigt, jedoch befindet sich das Klemmprofil im Sichtbereich des Fahrzeuginnenraums und tritt daher störend in Erscheinung. Insbesondere ist die Farb- und/oder die Oberflächenstrukturabstimmung zwischen der Sichtfläche des Dachhimmels und dem Klemmprofil schwierig, weil beide aus verschiedenen Kunststoffmaterialien bestehen, die nur sehr unvollkommen in der Farbgebung angeglichen werden können. Auf diese Weise wird die Dachöffnung, d.h. der Ausschnitt im Dachhimmel unvorteilhaft durch deutliche Umrahmungswirkung des Klemmprofils hervorgehoben, was zu einer störenden Unterbrechung der sonst glatten und großflächigen Deckenansicht im Fahrzeuginnenraum führt.

Bei einem weiteren bekannten Kraftfahrzeugdach (DE-GM 7 709 851) ist zwar zur Befestigung des steifen vorgeformten Dachhimmels am Dachrahmen kein die Deckenansicht störendes Klemmprofil vorgesehen, jedoch setzt die Befestigung des Dachhimmels bei diesem Kraftfahrzeugdach eine senkrechte Aufkantung des Dachrahmens voraus, die an ihrer oberen Kante von einer entsprechend nach oben gerichteten an den Dachhimmel angeformten und in die Dachöffnung hineinragenden am Rand des Dachhimmelausschnitts angebrachten Aufkantung übergriffen wird. Eine derartige senkrechte Aufkantung ist jedoch bei vielen Dachrahmen nicht vorhanden, die vielmehr zur Dachöffnung hin mit horizontalen Flanschen enden, an denen der Dachhimmel zu befestigen ist.

Bei einer bekannten nicht gattungszugehörigen Vorrichtung zum Befestigen von Auskleidungsplatten am Dachrahmen von Fahrzeugen oder zum Befestigen von Auskleidungsplatten aneinander (FR-A-1 192 068) wird eine im Querschnitt S-förmige Profilleiste aus Kunststoff verwendet. Die Nuten dieser Profilleiste liegen in der Gebrauchslage aber nicht übereinander, sondern nebeneinander. Mit ihrer einen als Klemmöffnung ausgebildeten U-förmigen Nut ist die Profilleiste auf den aus dem oberen Ende der Karosserie-Seitenwand und dem unteren Ende des Dachrahmens gebildeten Falz unter Klemmung aufgesteckt. Die andere U-förmige Nutöffnung der Profilleiste ist nach oben hin offen. Ihr freier Schenkel ist zur Bereitstellung einer Klemmwirkung nach innen hin abgebogen. In diese nach oben offene Klemmnut wird die Seitenkante einer Auskleidungsplatte eingesteckt. Aufgrund dieser Anordnung liegt die Profilleiste nach ihrer Anbringung im Sichtbereich.

Der Erfindung liegt die Aufgabe zugrunde, eine einfache und im Sichtbereich nicht störend hervortretende Vorrichtung zur Befestigung des Dachhimmels am Dachrahmen vorzusehen.

Die gestellte Aufgabe wird ausgehend von der eingangs angegebenen Gattung durch die in den Ansprüchen 1 und 2 angegebenen nebengeordneten Ausführungsformen gelöst. Gemäß der Ausführungsform nach Anspruch 1 ist vorgesehen, daß die Nuten des Klemmprofils in entgegengesetzter Richtung offen sind, daß die untere Nut den Rand des Flansches und die obere Nut den Rand des Ausschnitts aufnimmt, daß der Rand des Ausschnitts in an sich bekannter Weise (DE-GM 7 709 851) eine an den Dachhimmel nach oben gerichtet angeformte Aufkantung aufweist, die in die Dachöffnung hineinragt, und daß der Rand des Ausschnitts einen an die Aufkantung anschließenden Randstreifen aufweist, der zum Klemmprofil hin umgelegt ist, wobei die Aufkantung des Randes des Ausschnitts im Dachhimmel an ihrer dem Klemmprofil zugewendeten Seite mit einer parallel zum Flansch des Dachrahmens verlaufenden Biegeeinkerbung versehen ist, deren Seitenwände nach Umlegung des an die Biegeeinkerbung anschließenden Randstreifens aneinanderliegen, der in der o-beren Nut des Klemmprofils eingeklemmt ist.

Die Ausführungsform nach Anspruch 2 ist dadurch gekennzeichnet, daß die Nuten des Klemmprofils in entgegengesetzter Richtung offen sind, daß die untere Nut den Rand des Flansches und die obere Nut den Rand des Ausschnitts aufnimmt, daß der Rand des Ausschnitts in an sich bekannter Weise (DE-GM 7 709 851) eine an den Dachhimmel nach oben gerichtet angeformte Aufkantung aufweist, die in die Dachöffnung hineinragt, und daß der Rand des Ausschnitts einen an die Aufkantung anschließenden Randstreifen aufweist, der zum Klemmprofil hin umgelegt ist, wobei der Dachhimmel an seiner Sichtseite mit einem Überzugsmaterial beschichtet ist, das zur Bildung des Randstreifens über die Aufkantung übersteht, welcher zum Klemmprofil hin umgelegt und in der oberen Nut des Klemmprofils eingeklemmt ist.

Aufgrund der Anordnung gemäß der Ansprüche 1 und 2 befindet sich das Klemmprofil außerhalb des vom Fahrzeuginnenraum aus sichtbaren Bereichs der Fahrzeugkarosserie. Die Deckenansicht erscheint glattflächig und wird nicht durch Umrahmungseffekte gestört. Die Befestigung des Dachhimmels am Klemmprofil befindet sich ebenfalls im vom Fahrzeuginneren nicht sichtbaren Bereich der Dachkonstruktion. Der zum Klemmprofil hin umgelegte Randstreifen der Aufkantung des Dachhimmels trägt bei der Anordnung gemäß Anspruch 1 nach seiner Befestigung in der oberen Nut des Klemmprofils zu einer Randaussteifung des Dachhimmels im Bereich seines Ausschnitts wirksam bei, was noch durch die flächige Anlage der Seitenwände der Biegeeinkerbung gefördert wird.

Bei der Ausführungsform nach Anspruch 2 wird auf die Anbringung einer Biegeeinkerbung verzichtet, weil nur das Überzugsmaterial über die Aufkantung hinaus weitergeführt wird und die Befestigung des Dachhimmels am auf den Flansch des Dachrahmens aufgesteckten Klemmprofil übernimmt. Selbstverständlich kann auch bei der zuvor behandelten Ausführungsform der steife vorgeformte Dachhimmel mit einem Überzugmaterial beschichtet sein.

Vorzugsweise ist das Klemmprofil gemäß Anspruch 3 im Querschnitt S-förmig ausgeführt und ist mindestens im Bereich seiner oberen Nut zur Klemmhalterung des Randes des Ausschnitts federnd ausgebildet. Auf diese Weise kann das ggf. ebenfalls federnd auf den Flansch des Dachrahmens aufgesteckte Klemmprofil durch sein Federverhalten im Bereich der oberen Nut den zum Klemmprofil hin umgelegten Ausschnittsrand des Dachhimmels ohne Zuhilfenahme weiterer Befestigungsmittel sicher befestigen.

Für die Ausbildung des Klemmprofils stehen mehrere geeignete Werkstoffe zur Verfügung. So kann das Klemmprofil gemäß Anspruch 4 aus einem Metallblech, beispielsweise Federstahl, geformt sein. Das Klemmprofil kann aber auch entsprechend Anspruch 5 aus einem thermoplastischen Kunststoff, beispielsweise aus einem extrudierten Polyamid, geformt sein.

Die beiden Ausführungsformen der Erfindung werden nachfolgend anhand der Beispiele darstellenden Zeichnungen näher erläutert. Darin zeigt:
- Fig. 1: die abgebrochene Draufsicht auf ein Kraftfahrzeugdach, das als Schiebedach- oder Schiebehebedach ausgebildet ist,
- Fig. 2: den abgebrochenen Schnitt durch den Dachrahmen und die Befestigungssituation des Dachhimmels entlang der Linie II-II in Fig. 1,
- Fig. 3: eine vergrößerte Schnitteinzelheit aus Fig. 2,
- Fig. 4: einen abgebrochenen Schnitt entsprechend der Fig. 3, jedoch vor der Klemmbefestigung des Dachhimmels am Klemmprofil,
- Fig. 5: den abgebrochenen Schnitt durch den Dachrahmen und die Befestigungssituation für den Dachhimmel entlang der Linie V-V in Fig. 1 und
- Fig. 6: einen der Fig. 3 ähnlichen Schnitt, jedoch bei einer anderen Ausführungsform der Befestigung.

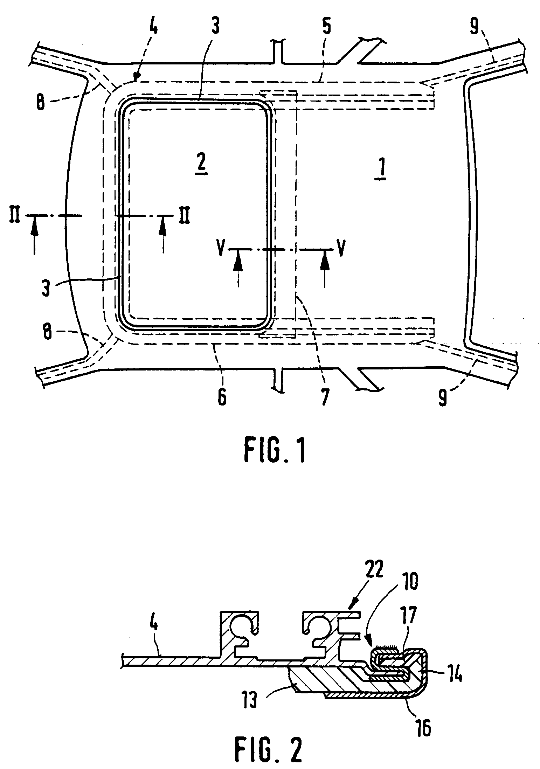

Bei dem in Fig. 1 dargestellten Kraftfahrzeugdach befindet sich innerhalb einer festen Dachfläche 1 ein nicht näher bezeichneter Dachausschnitt, der durch einen bewegbaren starren Deckel 2 verschließbar ist. In Fig. 1 ist der Deckel 2, der aus Blechmaterial oder aber auch aus Glas bzw. einem durchsichtigen Kunststoff hergestellt sein kann, in seiner den Dachausschnitt schließenden Lage dargestellt. Zwischen der festen Dachfläche 1 und dem Deckel 2 befindet sich dabei ein umlaufender Randspalt 3. Unterhalb der festen Dachfläche 1 ist ein den Dachausschnitt umgebender U-förmiger Führungsrahmen 4 befestigt, dessen beiden seitlichen Rahmenteile 5 und 6 durch einen den Rahmen versteifenden und die Dachöffnung auch nach hinten begrenzenden Querverbinder 7 miteinander verbunden sind. An die wasserführenden Bereiche des Führungsrahmens 4 sind zwei vordere und zwei hintere Wasserabläufe 8 bzw. 9 angeschlossen. Die am Führungsrahmen 4 angebrachten Führungsschienen und die die Bewegungen des Deckels 2 steuernden Elemente gehören nicht zur vorliegenden Erfindung und sind daher weder in der Zeichnung dargestellt noch in der nachfolgenden Beschreibung näher erläutert.

Eine erste Ausführungsform der Vorrichtung wird unter Bezugnahme auf die Fig. 2 bis 5 beschrieben. Wie daraus hervorgeht, ist ein S-förmiges Klemmprofil 10 mit seiner unteren Nut 11 auf den horizontalen Flansch 12 des Führungsrahmens 4 aufgesteckt, wobei eine Klemmwirkung dadurch er zielt werden kann, daß die Nutweite am Eingang der unteren Nut 11 geringer ausgeführt ist als die Dicke des Flansches 12. Dadurch ergibt sich Klemmsitz des Klemmprofils 10 auf dem Flansch 12.

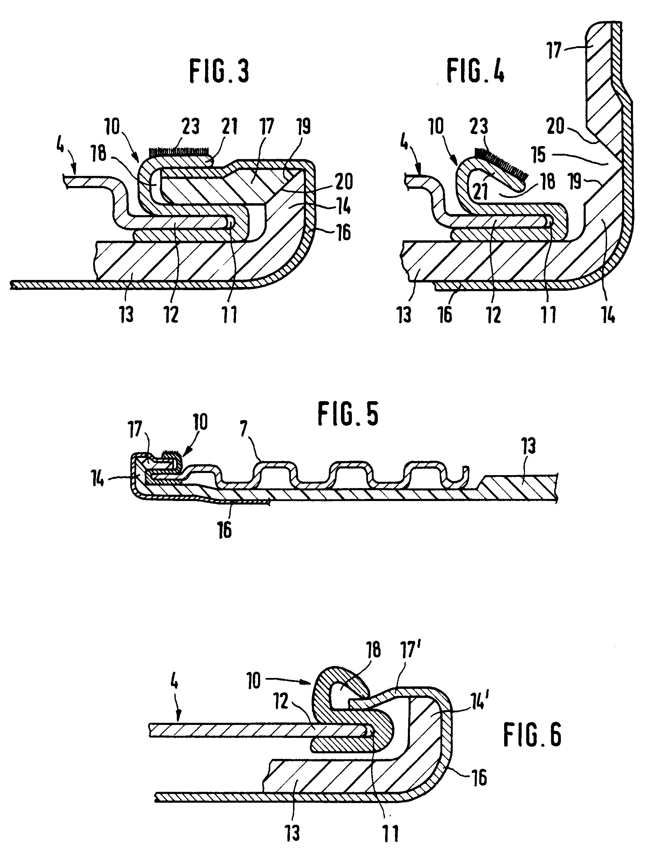

Wie Fig. 4 veranschaulicht, wird ein aus einem geeigneten Kunststoff vorgeformter steifer Dachhimmel 13 von unten bis zur Anlage an das Klemmprofil 10 an den Führungsrahmen 4 herangeführt, wobei eine an den Dachhimmel 13 angeformte nach oben gerichtete Aufkantung 14 in die von dem Führungsrahmen 4 umgrenzte Dachöffnung hineinragt. In der Aufkantung 14 an ihrer dem Klemmprofil 10 zugewandten Seite befindet sich parallel verlaufend zum Flansch 12 eine Biegeeinkerbung 15, die im gezeigten Beispiel durch die Materialdicke des Dachhimmels 13 bis zu einem mit diesem verbundenen Überzugsmaterial 16 hindurchgeführt ist. Das Überzugsmaterial bildet daher an der Biegeeinkerbung 15 eine scharnierartige Verbindung zwischen der Aufkantung 14 und dem oberen an die Biegeeinkerbung 15 anschließenden Randstreifen 17. Bei diesem Ausführungsbeispiel besteht auch der Randstreifen 17 aus dem verhältnismäßig dicken Kunststoffmaterial des Dachhimmels 13 und dem damit vereinigten Überzugsmaterial 16.

Zur Befestigung des Dachhimmels 13 an dem Führungsrahmen 4 wird der Randstreifen 17 zum Klemmprofil 10 hin umgelegt und in dessen federnd aufgebogene obere Nut 18 eingeschoben, bis die in den Fig. 2, 3 und 5 dargestellte Lage der Teile erreicht ist. Hierbei liegen die Seitenwände 19 und 20 der Biegeeinkerbung 15, welche die Aufkantung 14 nach oben bzw. den Randstreifen 17 nach unten begrenzen, flächig aneinander und werden in dieser den Randbereich des Dachhimmels versteifenden Lage durch das Klemmprofil 10 gehalten, in dessen obere Nut 18 der Randstreifen 17 eingeklemmt ist. Die Federwirkung der oberen Nut 18 wird durch ein Abbiegen des oberen Flansches 21 des Klemmprofils 10 erreicht, die in Fig. 4 übertrieben dargestellt ist. Um den Randstreifen 17 an allen vier Seiten der Dachöffnung zum Klemmprofil 10 hin umlegen zu können, sind natürlich an den Ecken des Dachhimmelausschnitts entsprechende Aussparungen (nicht gezeigt) im Randstreifen 17 vorzusehen, die ausgehend von der oberen Kante des Randstreifens 17 bis in die Biegeeinkerbung 15 geführt sind.

Das Klemmprofil 10, das aus einem geeigneten Metallblech oder aber auch aus einem thermoplastischen Kunststoff geformt ist, kann an allen vier Seiten des Führungsrahmens 4 durchgehend vorgesehen sein. Es kann jedoch auch ausreichend sein, wenn über die Seitenlängen verteilt mehrere kürzere Abschnitte des Klemmprofils 10 angeordnet sind.

Aus Fig. 2 ist die bei diesem Ausführungsbeispiel mit dem Führungsrahmen 4 integrierte Führungsschiene 22 ersichtlich. Fig. 5 zeigt die entsprechende Befestigungssituation an dem Querverbinder 7. Im gezeichneten Beispiel der Figuren 2 bis 5 befindet sich auf dem oberen Flansch 21 des Klemmprofils 10 eine Bürstenflorschicht 23, die für die Gleitlagerung des Deckelhimmels (nicht dargestellt) bestimmt ist.

Das in Fig. 6 gezeigte Ausführungsbeispiel unterscheidet sich von dem vorangehend beschriebenen Ausführungsbeispiel im wesentlichen dadurch, daß an die Aufkantung 14′ keine Biegeeinkerbung und auch kein aus dem Material des Dachhimmels 13 gebildeter Randstreifen anschließt. Der Randstreifen 17′ wird in diesem Fall von dem Überzugsmaterial 16 gebildet, welches über die Aufkantung 14′ übersteht. Die Aufkantung 14′ ist an ihrer oberen Innenkante abgerundet, so daß der zum Klemmprofil 10 hin umgelegte Randstreifen 17′ an dieser Kante eine entsprechende Abrundung erfährt. Der Randstreifen 17′ ist im übrigen auf ähnliche Weise in die obere Nut 18 des Klemmprofils 10 eingelegt und dort durch Klemmwirkung festgehalten, wie das mit Bezug auf das vorhergehende Ausführungsbeispiel beschrieben worden ist. Das Klemmprofil 10 bei dem Ausführungsbeispiel nach Fig. 6 weist ebenfalls einen S-förmigen Querschnitt auf, der jedoch abweichend gegenüber dem Klemmprofil entsprechend dem Ausführungsbeispiel nach den Fig. 2 bis 5 gestaltet ist. Das Klemmprofil 10 nach Fig. 6 ist in seiner Formgebung der Herstellung aus einem thermoplastischen Kunststoff, beispielsweise einem Polyamid, besonders angepaßt.

## Patentansprüche

1. Vorrichtung zur Befestigung eines vorgeformten steifen Dachhimmels an horizontalen Flanschen eines die Dachöffnung einer Schiebedach- oder Schiebehebedachkonstruktion umgebenden Dachrahmens mittels eines Klemmprofils, das in zwei übereinander angeordneten Nuten die Ränder der Flansche und des Ausschnitts aufnimmt, wobei der Dachhimmel einen der Dachöffnung entsprechenden Ausschnitt aufweist, dadurch gekennzeichnet, daß die Nuten (11, 18) des Klemmprofils (10) in entgegengesetzter Richtung offen sind, daß die untere Nut (11) den Rand des Flansches (12) und die obere Nut (18) den Rand des Ausschnitts aufnimmt, daß der Rand des Ausschnitts in an sich bekannter Weise eine an den Dachhimmel (13) nach oben gerichtet angeformte Aufkantung (14) aufweist, die in die Dachöffnung hineinragt, und daß der Rand des Ausschnitts einen an die Aufkantung (14) anschließenden Randstreifen (17) aufweist, der zum Klemmprofil (10) hin umgelegt ist, wobei die Aufkantung (14) des Randes des Ausschnitts im Dachhimmel (13) an ihrer dem Klemmprofil (10) zugewendeten Seite mit einer parallel zum Flansch (12) des Dachrahmens verlaufenden Biegeeinkerbung (15) versehen ist, deren Seitenwände (19, 20) nach Umlegung des an die Biegeeinkerbung (15) anschließenden Randstreifens (17) aneinanderliegen, der in der oberen Nut (18) des Klemmprofils (10) eingeklemmt ist.

2. Vorrichtung zur Befestigung eines vorgeformten steifen Dachhimmels an horizontalen Flanschen eines die Dachöffnung einer Schiebedach- oder Schiebehebedachkonstruktion umgebenden Dachrahmens mittels eines Klemmprofils, das in zwei übereinander angeordneten Nuten die Ränder der Flansche und des Ausschnitts aufnimmt, wobei der Dachhimmel einen der Dachöffnung entsprechenden Ausschnitt aufweist, dadurch gekennzeichnet, daß die Nuten (11, 18) des Klemmprofils (10) in entgegengesetzter Richtung offen sind, daß die untere Nut (11) den Rand des Flansches (12) und die obere Nut (18) den Rand des Ausschnitts aufnimmt, daß der Rand des Ausschnitts in an sich bekannter Weise eine an den Dachhimmel (13) nach oben gerichtet angeformte Aufkantung (14') aufweist, die in die Dachöffnung hineinragt, und daß der Rand des Ausschnitts einen an die Aufkantung (14') anschließenden Randstreifen (17') aufweist, der zum Klemmprofil (10) hin umgelegt ist, wobei der Dachhimmel (13) an seiner Sichtseite mit einem Überzugmaterial (16) beschichtet ist, das zur Bildung des Randstreifens (17') über die Aufkantung (14') übersteht, welcher zum Klemmprofil (10) hin umgelegt und in der oberen Nut (18) des Klemmprofils eingeklemmt ist.

3. Vorrichtung nach Anspruch 1 oder 2, dadurch gekennzeichnet, daß das Klemmprofil (10) im Querschnitt S-förmig ausgeführt ist und mindestens im Bereich seiner oberen Nut (18) zur Klemmhalterung des Randes des Ausschnitts federnd ausgebildet ist.

4. Vorrichtung nach einem der Ansprüche 1 bis 3, dadurch gekennzeichnet, daß das Klemmprofil (10) aus Metallblech geformt ist.

5. Vorrichtung nach einem der Ansprüche 1 bis 3, dadurch gekennzeichnet, daß das Klemmprofil (10) aus einem thermoplastischen Kunststoff geformt ist.

## Claims

1. Device for fixing a preshaped, stiff roof liner to horizontal flanges of a roof frame surrounding the roof opening of a sliding roof or sliding-lifting roof construction by means of a clamping profile, which receives, in two grooves situated one above the other, the edges of the flange and of the aperture, the roof liner possessing an aperture corresponding to the roof opening, characterized in that the grooves (11, 18) of the clamping profile (10) are open in opposite directions, that the lower groove (11) seats the edge of the flange (12) and the upper groove (18) the edge of the aperture, that the edge of the aperture comprises, in known manner, an upward rim (14) formed upwardly directed on the roof liner (13), which rim penetrates into the roof opening, and that the edge of the aperture comprises an edge strip (17), adjoining the upward rim (14), which edge strip is folded over towards the clamping profile (10), the upward rim (14) of the edge of the aperture in the roof liner (13) being provided, at its side facing towards the clamping profile (10), with a bending notch (15) extending parallel to the flange (12) of the roof frame, the side walls (19, 20) of which notch bear against each other after the edge strip (17) adjoining the bending notch (15) has been bent over, this edge strip being clamped in the upper groove (18) of the clamping profile (10).

2. Device for fixing a preshaped, stiff roof liner to horizontal flanges of a roof frame surrounding the roof opening of a sliding roof or sliding-lifting roof construction by means of a clamping profile, which receives, in two grooves situated one above the other, the edges of the flange and of the aperture, the roof liner possessing an aperture corresponding to the roof opening, characterized in that the grooves (11, 18) of the clamping profile (10) are open in opposite directions, that the lower groove (11) seats the edge of the flange (12) and the upper groove (18) the edge of the aperture, that the edge of the aperture possesses, in known manner, an upward rim (14') formed upwardly on the roof liner (13), which rim penetrates into the roof opening, and that the edge of the aperture possesses an edge strip (17') adjoining the upward rim (14'), which edge strip is folded over towards the clamping profile (10), the roof liner (13) being faced on its visible side with a covering material (16) which projects beyond the upward rim (14') to form the edge strip (17'), which edge strip is folded over towards the clamping profile (10) and is clamped in the upper groove (18) of the clamping profile.

3. Device according to Claim 1 or 2, characterized in that the clamping profile (10) is S-shaped in cross-section and is formed, at least in the region of its upper groove (18), for the clamping retention of the edge of the aperture by spring action.

4. Device according to one of Claims 1 to 3, characterized in that the clamping profile (10) is formed from metal sheet.

5. Device according to one of Claims 1 to 3, characterized in that the clamping profile (10) is formed from a thermoplastics material.

## Revendications

1. Dispositif pour fixer une garniture de plafond rigide préformée à des ailes horizontales d'un cadre de toit ouvrant entourant l'ouverture de pavillon d'une construction de toit ouvrant coulissant ou de toit ouvrant coulissant et relevable, comprenant un profilé de serrage qui reçoit les bords des ailes et de la découpe dans deux rainures disposées l'une au-dessus de l'autre, la garniture de plafond de prÉsentant une découpe qui correspond à l,ouverture du pavillon, caractérisé en ce que les rainures (11, 18) du profilé de serrage (10) s'ouvrent dans des directions opposées, en ce que la rainure inférieure (11) reçoit le bord de l'aile (12) et la rainure supérieure (18) reçoit le bord de la découpe, en ce que le bord de la découpe présente, d'une façon connue en soi, une bordure redressée (14) venue de matière avec la garniture de plafond (13), dirigée vers le haut et qui s'engage dans l'ouverture du pavillon, et en ce que le bord de la découpe présente une bande de bord (17) que fait suite à la bordure redressée (14), et qui est rabattue vers le profilé de serrage (10), la bordure redressée (14) du bord de la découpe de la garniture de plafond (13), étant munie sur son côté dirigé vers le profilé de serrage (10), d'une encoche de pliage (15) qui s'étend parallèlement à l'aile (12) du cadre de toit ouvrant et dont les flancs (19, 20) sont appuyés l'un contre l'autre après le rabattement de la bande de bord (17) qui fait suite à l'encoche de pliage (15), bande qui est pincée dans la rainure supérieure (18) du profilé de serrage (10).

2. Dispositif pour fixer une garniture de plafond rigide préformée à des ailes horizontales d'un cadre de toit ouvrant entourant l'ouverture de pavillon d'une construction de toit ouvrant coulissant ou de toit ouvrant coulissant et relevable, comprenant un profilé de serrage qui reçoit les bords des ailes et de la découpe dans deux rainures disposées l'une au-dessus de l'autre, la garniture de plafond de présentant une découpe qui correspond à l'ouverture du pavillon, caractérisé en ce que les rainures (11, 18) du profilé de serrage (10) s'ouvrent dans des directions opposées, en ce que la rainure inférieure (11) reçoit le bord de l'aile (12) et la rainure supérieure (18) reçoit le bord de la découpe, en ce que le bord de la découpe présente, d'une façon connue en soi, une bordure redressée (14') venue de matière avec la garniture de plafond (13), dirigée vers le haut et qui s'engage dans l'ouverture du pavillon, et en ce que le bord de la découpe présente une bande de bord (17') qui fait suite à la bordure redressée (14'), et qui est rabattue vers le profilé de serrage (10), la garniture de plafond (13) étant garnie, sur sa face visible, d'une matière de revêtement (16) qui déborde au-delà de la bordure redressée (14') pour former la bande de bord (17'), matière de revêtement qui est rabattue vers le profilé de serrage (10) et est pincée dans la rainure supérieure (18) du profilé de serrage.

3. Dispositif selon la revendication 1 ou 2, caractérisé en ce que le profilé de serrage (10) présente une section en forme de S et est de constitution élastique au moins dans la région de sa rainure supérieure (18) pour retenir le bord de la découpe par pincement.

4. Dispositif selon une des revendications 1 à 3, caractérisé en ce que le profilé de serrage (10) est formé de tôle métallique.

5. Dispositif selon une des revendications 1 à 3, caractérisé en ce que le profilé de serrage (10) est formé de matière synthétique thermoplastique.
